# FASCICULE DE BREVET EUROPEEN

(11) **EP 0 757 465 B1**
(45) Date de publication et mention de la délivrance du brevet: **06.05.2004**
(21) Numéro de dépôt: 96410085.3
(22) Date de dépôt: 31.07.1996
(51) Int. Cl.: H04L 29/06, G06F 13/30

(54) **Circuit HDLC à bus interne partage**
HDLC-Anordnung mit verteiltem internen Bus
HDLC circuit with shared internal bus

(30) Priorité: 03.08.1995 FR 9509636
(43) Date de publication de la demande: 05.02.1997
(73) Titulaire: STMicroelectronics S.A., 92120 Montrouge (FR)
(72) Inventeur: Athenes, Claude, 75013 Paris (FR)
(74) Mandataire: de Beaumont, Michel

(56) Documents cités:
- WO-A-94/08308
- US-A- 5 175 818
- IBM TECHNICAL DISCLOSURE BULLETIN, vol. 34, no. 10a, Mars 1992, NEW YORK US, pages 259-263, XP002002463 "transmit data control block structure defined to optimize performance of a high level data link controller running in a layered microcode environment"
- PATENT ABSTRACTS OF JAPAN vol. 13, no. 125 (P-847), 28 Mars 1989 & JP-A-63 293658 (HITACHI LTD.), 30 Novembre 1988,
- IBM TECHNICAL DISCLOSURE BULLETIN, vol. 28, no. 6, Novembre 1985, NEW YORK US, pages 2633-2634, XP002002464 "method of communication of a high speed communication adapter"

## Description

La présente invention concerne un circuit de commande de liaisons de données, ou circuit HDLC. Elle concerne plus particulièrement à l'organisation des échanges de données entre différents constituants d'un tel circuit HDLC et une mémoire vive RAM partagée. Un example d'un tel circuit HDLC est connu de la demande de brevet WO-A-94 08 308, de Standard Microsystems Corporation, du 14 avril 1994.

Un exemple d'application de la présente invention concerne la réalisation d'un circuit HDLC intégré comportant un ou plusieurs contrôleurs HDLC (High Level Data Link Controller). Un contrôleur HDLC (ou plusieurs) se retrouve, par exemple, dans des cartes, dites cartes d'abonnés, de centres d'abonnés d'un réseau de télécommunication. Ces cartes d'abonnés ont notamment pour rôle d'aiguiller différentes communications qui circulent, par exemple en multiplex, sur des liaisons de données. Les données relatives à ces communications ainsi que les informations qui leur sont nécessaires (par exemple, le mode de transmission, le destinataire, etc.) ne font que transiter dans ces cartes d'abonnés. Une carte d'abonnés comporte une mémoire vive (RAM) chargée de stocker temporairement les données et informations relatives aux communications. La carte d'abonnés comporte également un microprocesseur chargé, notamment, de commander les échanges entre les différents constituants de la carte et, en particulier, les accès à la mémoire. Un circuit auquel s'applique la présente invention peut également se retrouver, par exemple, dans un signaleur d'un centre de transit d'un réseau téléphonique.

Outre le microprocesseur, plusieurs constituants associés aux contrôleurs HDLC ont régulièrement besoin d'accéder à la mémoire que ce soit pour y écrire ou y lire des informations et des données. Ils ont donc besoin d'avoir accès à des bus d'adresses et de données de cette mémoire. Il s'agit, notamment, de contrôleurs d'accès mémoire direct, ou contrôleurs DMA.

La présente invention vise à réaliser un circuit HDLC intégré dont le fonctionnement requiert un minimum d'intervention du microprocesseur.

La présente invention vise notamment à réaliser un circuit HDLC dont les accès à la mémoire de ses différents constituants sont organisés par le circuit lui-même, sans recours au microprocesseur ou à d'autres circuits.

La présente invention vise également à organiser ces accès en utilisant tous les cycles potentiels de lecture ou d'écriture de la mémoire en cas d'afflux de demandes.

La présente invention vise également à réaliser un circuit HDLC intégré qui puisse s'adapter à différents types de mémoire.

La présente invention vise également à permettre le partage d'une même mémoire entre plusieurs circuits HDLC de même nature associés au même microprocesseur et à organiser les accès à la mémoire entre ces différents circuits sans recours au microprocesseur ou à d'autres circuits.

Pour atteindre ces objets, la présente invention prévoit un circuit intégré de commande de liaisons de données (HDLC) du type comportant au moins un contrôleur HDLC et un contrôleur d'accès mémoire direct, et comportant des moyens pour organiser l'accès à un premier bus externe de liaison à une mémoire externe, par l'intermédiaire d'un bus interne sur lequel sont reliées différentes entités ayant besoin d'accéder à ladite mémoire externe et dont trois d'entre elles sont respectivement constituées, d'un contrôleur DMA de réception, d'un contrôleur DMA d'émission et d'un contrôleur d'interruptions le contrôleur DMA étant une desdites entités et ledit bus interne étant relié audit premier bus externe par l'intermédiaire d'un contrôleur mémoire intégré audit circuit HDLC et constituant une interface électrique entre le bus interne et le bus externe.

On désigne par contrôleur mémoire, au sens de la présente invention, un dispositif constituant une interface électrique entre le bus et la mémoire proprement dite. A la différence d'un contrôleur d'accès mémoire direct (DMA), cette interface ne réalise aucun calcul d'adresse en fonction des données. Elle se contente de transférer les adresses, des données et des signaux de commande vers la mémoire en effectuant, le cas échéant, un multiplexage. Le contrôleur mémoire n'identifie pas de quelle entité proviennent les données et adresses alors que le contrôleur DMA génère des adresses en fonction des données qu'il reçoit.

Selon un mode de réalisation de la présente invention, un microprocesseur externe audit circuit est également relié audit bus interne par l'intermédiaire d'un second bus externe, ledit bus interne étant relié audit second bus externe par l'intermédiaire d'une interface intégrée audit circuit HDLC, les accès dudit microprocesseur audit bus interne étant gérés par ledit circuit HDLC qui considère le microprocesseur, à ce titre et par l'intermédiaire de son interface, comme une de ses entités.

Selon un mode de réalisation de la présente invention, ladite interface est programmable par des broches dudit circuit HDLC pour s'adapter à différents types de microprocesseur.

Selon un mode de réalisation de la présente invention, ledit contrôleur mémoire comporte des moyens programmables pour s'adapter à différents types, capacité, et vitesse d'accès de mémoire, une des entités dudit circuit HDLC étant constituée d'un dispositif de rafraîchissement d'une mémoire dynamique.

Selon un mode de réalisation de la présente invention, lesdits moyens d'organisation des accès audit bus interne sont constitués d'un dispositif d'arbitrage recevant des signaux binaires asynchrones représentant des demandes d'accès audit bus interne émanant desdites entités, le dispositif d'arbitrage fournissant des signaux binaires d'autorisation d'accès auxdites entités sur la base d'une détermination de priorité entre les différentes demandes d'accès, au moyen d'un décodeur de priorité en logique câblée associé à un registre d'entrée, un chargement de l'état desdits signaux de demandes d'accès dans ledit registre d'entrée s'effectuant, si aucun cycle mémoire est en cours, périodiquement, au moyen d'un signal d'horloge et, si un cycle mémoire est en cours, à l'apparition d'une impulsion sur un signal délivré par ledit contrôleur mémoire et anticipant la fin du cycle mémoire d'un délai qui est fonction du temps de traitement des demandes d'accès par ledit décodeur de priorité.

Selon un mode de réalisation de la présente invention, ledit décodeur de priorité envoie, audit contrôleur mémoire, un signal binaire indicateur de la présence d'une demande d'accès autorisée, le chargement desdits signaux indicateurs d'une demande d'accès dans ledit registre d'entrée étant validé par l'inverse dudit signal indicateur de la présence d'une demande d'accès autorisée.

Selon un mode de réalisation de la présente invention, ledit dispositif de rafraîchissement dispose d'une gestion particulière de priorité qui consiste à lui affecter le rang de priorité le plus faible pendant une demi-période de l'intervalle de temps qui sépare deux de ses demandes d'accès et le rang de priorité le plus élevé pendant la seconde demi-période de cet intervalle si sa demande d'accès n'a pu être satisfaite pendant ladite première demi-période.

Selon un mode de réalisation de la présente invention, le rang de priorité associé à chaque entité, autre que ledit dispositif de rafraîchissement, est contenu dans un registre programmable que comporte ledit dispositif d'arbitrage.

Selon un mode de réalisation de la présente invention, ledit contrôleur d'interruptions comporte des moyens pour organiser la mémorisation de mots représentatifs au moins de l'origine et de la nature des interruptions émises par différents constituants dudit circuit HDLC dans plusieurs zones de ladite mémoire.

Selon un mode de réalisation de la présente invention, le dispositif d'arbitrage d'un circuit HDLC comporte des moyens pour être raccordé à d'autres dispositifs d'arbitrage de circuits HDLC du même type afin d'organiser un partage de ladite mémoire entre plusieurs circuits HDLC, l'affectation dudit premier bus externe à un desdits circuits HDLC s'effectuant par la circulation d'une impulsion, ou "jeton", dans une liaison unifilaire reliant les différents circuits en anneau, chaque circuit HDLC recevant ledit "jeton" sur un signal d'entrée envoyé par un circuit HDLC précédent sur un signal de sortie.

Selon un mode de réalisation de la présente invention, lesdits moyens servent en outre à valider l'attribution du bus interne à une desdites entités du circuit HDLC lorsque ledit "jeton" est présent dans ledit dispositif d'arbitrage qu'il comporte.

Selon un mode de réalisation de la présente invention, l'envoi dudit "jeton" par ledit dispositif d'arbitrage sur ledit signal de sortie est déclenché, soit par l'apparition dudit signal indicateur de la fin d'un cycle mémoire, soit par l'absence de demande d'accès de la part des entités du circuit HDLC auquel il est associé pendant que ledit "jeton" est présent sur ledit signal d'entrée.

Selon un mode de réalisation de la présente invention, lesdits moyens comportent un bloc de régénération dudit "jeton", ledit bloc de régénération recevant, outre le signal d'entrée, un signal binaire indicateur de l'existence d'une demande d'accès au sein dudit circuit HDLC auquel il est associé et délivrant, audit décodeur de priorité du dispositif d'arbitrage auquel il est associé, un signal binaire indicateur d'une affectation dudit "jeton", la largeur de l'impulsion constituant ledit "jeton" correspondant à une période d'un signal d'horloge.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, sous forme de schéma-blocs, un premier mode de réalisation d'un circuit HDLC selon l'invention ;
la figure 2 illustre, sous forme de chronogrammes, le fonctionnement d'un circuit HDLC, tel que représenté à la figure 1 ;
la figure 3 représente, sous forme de schéma-blocs, un mode de réalisation d'un anneau à "jeton" selon l'invention associant plusieurs circuits HDLC du type de celui représenté à la figure 1 ;
la figure 4 représente, sous forme de schéma-blocs, un dispositif de génération et de régénération d'un "jeton", selon l'invention, que comporte chacun des circuits HDLC représentés à la figure 3 ;
la figure 5 représente un exemple de réalisation d'un bloc de génération du "jeton" d'un circuit HDLC tel que représenté à la figure 4 ;
la figure 6 représente un exemple de réalisation d'un bloc de régénération du "jeton" d'un circuit HDLC tel que représenté à la figure 4 ; et
la figure 7 illustre, sous forme de chronogrammes, le fonctionnement d'un anneau à "jeton" selon l'invention tel que représenté à la figure 3.

Pour des raisons de clarté, les mêmes éléments ont, dans la mesure du possible, été désignés par les mêmes références aux différentes figures. De même, seuls les éléments et les liaisons entre ces éléments qui sont nécessaires à la compréhension de l'invention ont été représentés.

Une caractéristique de la présente invention est de prévoir, au sein du circuit HDLC, un bus interne dont les accès sont gérés par un dispositif d'arbitrage, le bus interne étant relié à un premier bus externe de liaison avec une mémoire vive RAM et à un second bus externe de liaison avec un microprocesseur mP.

Sauf précision contraire, on entend par bus au sens de la présente invention un ensemble de bus, respectivement de données, d'adresses et de commande permettant d'établir la liaison entre les différents constituants.

Selon l'invention, l'occupation du premier bus externe (bus mémoire) est organisée de manière indépendante du microprocesseur. En d'autres termes, l'invention prévoit que des demandes d'accès effectuées par des entités du circuit HDLC ayant besoin d'échanger des données avec la mémoire soient gérées sans avoir recours au microprocesseur. Le microprocesseur est, de ce point de vue et selon l'invention, considéré comme une entité. On réduit ainsi l'occupation du microprocesseur qui est alors davantage disponible pour effectuer d'autres traitements en utilisant, le cas échéant et indépendamment du bus mémoire, le second bus externe qui est son propre bus (bus microprocesseur).

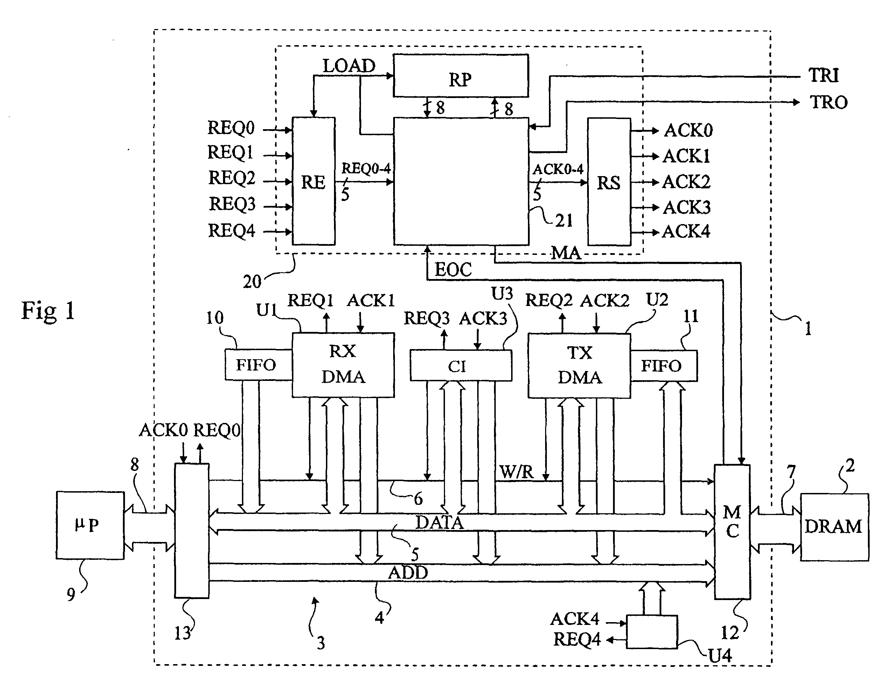

La figure 1 représente un mode de réalisation d'un circuit HDLC 1 selon l'invention. Le circuit 1 n'est représenté que partiellement. En effet, on n'a fait apparaître que les constituants, ou entités, de ce circuit 1 qui ont besoin d'échanger des données avec une mémoire 2. En particulier, le ou les contrôleurs HDLC n'ont pas été représentés dans la mesure où les données et informations dont ils ont besoin leur sont fournies par l'intermédiaire de contrôleurs DMA. A la figure 1, un bus interne désigné globalement par la référence 3 a été représenté de manière détaillée. En d'autres termes, on a représenté un bus 4 d'adresses ADD, un bus 5 de données DATA et un bus unifilaire 6 supportant un signal R/W indiquant si l'entité ayant accès aux bus d'adresses 4 et de données 5 souhaite lire ou écrire dans la mémoire 2. Par contre, les bus externes 7 et 8 de liaison, respectivement à la mémoire 2 et à un microprocesseur 9, ont été représentés de manière globale bien qu'ils présentent en fait la même structure que le bus interne 3.

Le circuit 1 comporte, notamment, deux contrôleurs, respectivement U1 et U2 d'accès mémoire direct, ou contrôleurs DMA, et une entité U3 de gestion des interruptions, ou contrôleur d'interruptions CI.

Un premier contrôleur RX_DMA U1, destiné à la réception des données, est chargé de stocker dans la mémoire 2 toutes les informations relatives aux communications qui arrivent. Il est également chargé de stocker dans la mémoire 2, par l'intermédiaire d'une mémoire FIFO 10 qui lui est associée, les données relatives à ces communications.

Un second contrôleur TX_DMA U2, destiné à la transmission des données, est chargé d'extraire de la mémoire 2 toutes les informations relatives aux communications devant être transmises. Il est également chargé d'extraire de la mémoire 2, par l'intermédiaire d'une mémoire FIFO 11 qui lui est associée, les données relatives à ces communications.

Le contrôleur d'interruptions U3 est, selon une autre caractéristique de l'invention qui sera décrite par la suite, chargé de stocker dans la mémoire 2 tout événement remarquable lié au fonctionnement du circuit HDLC 1.

Le circuit 1 comporte également un dispositif U4 de rafraîchissement d'une mémoire dynamique DRAM. Le fait d'associer au circuit 1 un tel dispositif de rafraîchissement U4 permet, comme on le verra par la suite, de rendre ce circuit indépendant du type (statique ou dynamique) de mémoire utilisé.

Le bus interne 3 est, selon l'invention, relié à des dispositifs d'interface, respectivement 12 et 13, destinés à permettre les échanges avec les bus externes, respectivement 7 et 8. En d'autres termes, un contrôleur mémoire MC 12 et une interface 13 du microprocesseur sont, selon l'invention, intégrés au circuit 1.

Le rôle de ces interfaces 12 et 13 est d'adapter les adresses, les données et les signaux de commande, respectivement, à la mémoire et au microprocesseur associés au circuit HDLC.

Les quatre entités U1, U2, U3 et U4 du circuit 1 qui ont besoin d'accéder à la mémoire 2 sont également raccordées au bus interne 3.

Les entités U1, U2 et U3 (RX_DMA, TX_DMA et CI) sont reliées au bus 4 d'adresses, au bus 5 de données et au bus de commande R/W 6 dans la mesure où elles sont susceptibles de lire et d'écrire dans des cellules de la mémoire 2.

La mémoire FIFO 10 n'est reliée qu'au bus 5 de données dans la mesure où elle est chargée de stocker, dans la mémoire 2 et sous commande du contrôleur RX_DMA U1 qui fournit donc l'adresse de la mémoire 2, les données relatives aux communications reçues.

La mémoire FIFO 11 n'est reliée qu'au bus 5 de données dans la mesure où elle est chargée d'extraire, de la mémoire 2 et sous commande du contrôleur TX_DMA U2 qui fournit donc l'adresse de la mémoire 2, les données relatives aux communications à transmettre.

Le dispositif U4 de rafraîchissement de la mémoire est relié uniquement au bus 4 d'adresses dans la mesure où le rafraîchissement d'une mémoire dynamique consiste uniquement à adresser périodiquement les cellules de la mémoire 2.

Un avantage de la présente invention est qu'en ayant recours au bus interne 3 et au premier bus externe 7, on libère le microprocesseur 9 de l'organisation des accès à la mémoire 2 entre les entités U1, U2, U3 et U4 du circuit 1.

Un autre avantage de l'invention est qu'en intégrant l'interface 13 du microprocesseur 9 et le contrôleur mémoire 12 au circuit 1, le circuit 1 peut être associé à différents types de mémoires 2 et de microprocesseur 9.

L'interface 13 du microprocesseur est, selon l'invention, programmable par des broches (non représentées) du circuit pour choisir le type de microprocesseur 9, par exemple entre un microprocesseur 8 bits, 16 bits ou 32 bits à adresses et données multiplexées ou non.

Le contrôleur mémoire 12 est, selon l'invention, programmable au moyen de registres permettant de choisir, notamment le type (SRAM ou DRAM), la taille et le temps de cycle de la mémoire 2.

Selon l'invention, les accès à la mémoire 2 sont exclusivement gérés par le circuit HDLC 1. Pour ce faire, le circuit 1 comporte un dispositif 20 d'organisation, ou d'arbitrage, des accès au bus interne 3 entre le microprocesseur 9 et les entités U1, U2, U3 et U4 du circuit 1.

Pour des raisons de clarté, seules les liaisons liées au fonctionnement du dispositif d'organisation 20 de ces accès au bus interne 3 ont été représentées à la figure 1.

Toutes les entités ainsi que le microprocesseur 9 sont susceptibles d'émettre des demandes d'accès asynchrones qui sont envoyées sur des entrées d'un registre d'entrée RE du dispositif 20. Ces demandes d'accès sont envoyées par l'interface 13 du microprocesseur 9 et par les entités, respectivement U1, U2, U3 et U4, sous la forme de signaux binaires, respectivement REQ0, REQ1, REQ2, REQ3 et REQ4, dont l'état indique un besoin, ou non, d'accéder au bus interne 3. Par exemple, l'état de repos des signaux REQ0 à REQ4 est un état "0" et ces signaux sont positionnés dans un état "1" lorsque l'entité qui leur est associée demande l'accès à la mémoire 2.

Un décodeur de priorité 21 charge périodiquement les signaux REQ0 à REQ4 dans le registre RE et les interprète immédiatement. La période de chargement du registre RE correspond, en cas d'afflux de demandes et comme on le verra par la suite, à la durée d'un cycle de lecture ou d'écriture dans la mémoire 2. Le rôle du registre RE est d'éviter des conflits au sein du décodeur de priorité 21 dans la mesure où les états des signaux REQ0 à REQ4 changent de manière asynchrone.

L'interprétation des signaux REQ0 à REQ4 par le décodeur 21 a pour objet de déterminer quelle entité, parmi celles qui ont demandé l'accès au bus 3, bénéficie du rang de priorité le plus élevé et doit se voir accorder cet accès. Le décodeur de priorité 21 décide d'accorder, au microprocesseur 9 ou à une entité donnée, un accès au bus interne 3 en fonction du rang de la priorité associé à cette entité (ou au microprocesseur 9) et contenu dans un registre RP programmable par le microprocesseur 9. Ce registre RP est, par exemple, un registre de huit bits qui contient un codage des rangs de priorité associés aux trois entités U1, U2, U3 (RX_DMA, TX_DMA et CI) et au microprocesseur 9.

Selon l'invention, on affecte à l'entité U4, ou dispositif de rafraîchissement, une gestion de priorité particulière qui sera décrite en relation avec la description du contenu du registre programmable RP qui sera effectuée par la suite.

La mémoire vive 2 peut donc, selon l'invention, être une mémoire statique SRAM ou une mémoire dynamique DRAM. Si la mémoire 2 est une mémoire statique SRAM, le dispositif d'arbitrage 20 organise l'accès au bus interne 3 entre le microprocesseur 9 et les entités U1, U2 et U3.

La décision du décodeur de priorité 21 est transmise à l'interface 13 du microprocesseur 9 et aux différentes entités U1, U2, U3 et U4 sous la forme de signaux binaires, respectivement ACK0, ACK1, ACK2, ACK3 et ACK4, dont l'état indique pour chaque entité l'autorisation, ou non, d'accéder au bus interne 3. Par exemple, un état "0" présent sur un des signaux ACK0 à ACK4 indique que le bus 3 n'est pas disponible (ou pas demandé) pour l'entité correspondante tandis qu'un état "1" indique que l'accès lui est autorisé.

Les signaux ACK0 à ACK4 transitent par un registre de sortie RS de manière à ce que les accès au bus interne 3 soient synchrones avec une horloge de commande (non représentée). Cette horloge correspond, par exemple, à l'horloge du microprocesseur 9 et est, par exemple, une horloge à 32 MHz. On notera cependant que les signaux REQ1 à REQ4 ne sont pas forcément synchrones avec cette horloge. Les signaux de commande liés à l'horloge n'ont pas été représentés à la figure 1 pour des raisons de clarté.

Dans l'exemple représenté, les registres RE et RS sont des registres de cinq bits. Le dispositif d'arbitrage selon l'invention pourra, bien entendu, être dimensionné pour organiser au moyen d'un même dispositif d'arbitrage 20 les accès au bus interne 3 d'un plus grand nombre d'entités. On devra pour cela augmenter le nombre de bits des registres RE, RS et RP.

D'autres entités extérieures au circuit 1 peuvent même, le cas échéant, avoir accès au bus interne 3 par l'intermédiaire du microprocesseur 9. Il peut s'agir, par exemple, de périphériques du microprocesseur 9. Dans un tel cas, ces périphériques utilisent le second bus externe 8 pour accéder au bus interne 3. Le bus externe 8 est cependant géré par le microprocesseur 9 et c'est lui qui demande au dispositif 20 du circuit 1, les accès à la mémoire 2, que ce soit pour lui-même ou les autres entités raccordées au bus 8.

On notera que le microprocesseur 9 est, du point de vue du circuit 1, considéré comme une entité.

Les états des signaux REQ0 à REQ4 changent de manière aléatoire et plusieurs demandes d'accès émanant de différentes entités peuvent, ou non, être simultanées. Par contre, côté sortie du dispositif 20, un seul des signaux d'autorisation ACK0 à ACK4 présente un état "1" correspondant à une autorisation d'accès, tous les autres signaux d'autorisation étant à "0".

Deux signaux, respectivement EOC et MA assurent, selon l'invention, une synchronisation entre le bus interne 3 du circuit HDLC 1 et le bus externe 7 de liaison à la mémoire 2.

Le signal EOC est un signal qui indique, par une impulsion émise par le contrôleur mémoire 12, la fin d'un cycle de lecture ou d'écriture. Ce signal EOC est envoyé, par le contrôleur 12, au décodeur de priorité 21.

Le signal MA est délivré, par le décodeur 21, au contrôleur mémoire 12 pour lui indiquer la présence d'une demande d'accès qui doit être satisfaite. Le signal MA est un signal binaire dont l'état indique au contrôleur 12 que la mémoire 2 va, ou non, être adressée. Par exemple, un état "1" indique qu'une autorisation d'accès a été donnée par le dispositif d'arbitrage 20. Le positionnement à l'état "1" du signal MA est simultané avec le positionnement à l'état "1" d'un des signaux ACK0 à ACK4. Le signal MA est, par exemple, obtenu par la somme (OU logique) des signaux ACK0 à ACK4, ou des signaux REQ0 à REQ4 en sortie du registre RE. Le signal MA est positionné à l'état "0" à l'apparition d'une impulsion sur le signal EOC pour indiquer que la mémoire 2 est libre pour un nouvel accès.

Bien que cela n'ait pas été représenté, le registre RS comporte un bit supplémentaire afin que le signal MA soit synchrone avec celui des signaux ACK0 à ACK4 qui est positionné à "1".

Si le signal MA est à l'état "0" et qu'une entité U1 U2, U3 ou U4 ou le microprocesseur 9 envoie une demande d'accès, cette demande est, selon l'invention, satisfaite quasi-immédiatement. Pour ce faire, le chargement de l'état des signaux REQ0 à REQ4 dans le registre RE, donc l'autorisation éventuelle d'un nouvel accès par le décodeur de priorité 21, est commandé par un signal LOAD issu du décodeur de priorité 21.

Ce signal LOAD est conformé pour permettre un chargement périodique, le plus rapide possible, si la mémoire 2 est libre lorsqu'une demande d'accès arrive sur une des entrées du registre RE. Par contre, si une demande d'accès arrive pendant un cycle de lecture ou d'écriture de la mémoire 2, le chargement de l'état des signaux REQ0 à REQ4 dans le registre RE est autorisé par le signal LOAD à l'apparition d'une impulsion véhiculée par le signal EOC. Le signal LOAD est, par exemple, le résultat d'une combinaison logique de type "OU" (non représentée) du produit du signal EOC par le signal MA et du produit d'un signal d'horloge CLK par l'inverse du signal MA.

L'apparition d'une impulsion sur le signal EOC sert en outre au décodeur 21 pour basculer celui des signaux ACK0 à ACK4 qui est à l'état "1" vers l'état "0". Cela permet, à la fois, d'autoriser l'accès au bus interne 3 à une autre entité et de prévenir l'entité qui vient d'accéder au bus 3 que la mémoire 2 a terminé sa tâche. Lorsqu'un signal ACK passe à l'état "1", l'entité qui y est associée présente une adresse sur le bus d'adresse et le bit de lecture/écriture sur le bus unifilaire 6. Si l'entité a adressé la mémoire en écriture, elle présente également les données sur le bus de données 5. Si l'entité a adressé la mémoire en lecture, elle échantillonne le bus de données 5 lorsque le signal ACK passe à l'état "0".

Le signal LOAD commande également la lecture du registre programmable RP par le décodeur 21.

Le décodeur 21 délivre au contrôleur mémoire 12 le signal binaire MA qui lui indique, par son état, si la mémoire 2 va être adressée, ou non. L'état "0" indique qu'aucune demande d'accès n'est présente sur les entrées du registre RE tandis que l'état "1" indique qu'une autorisation d'accès à été donnée.

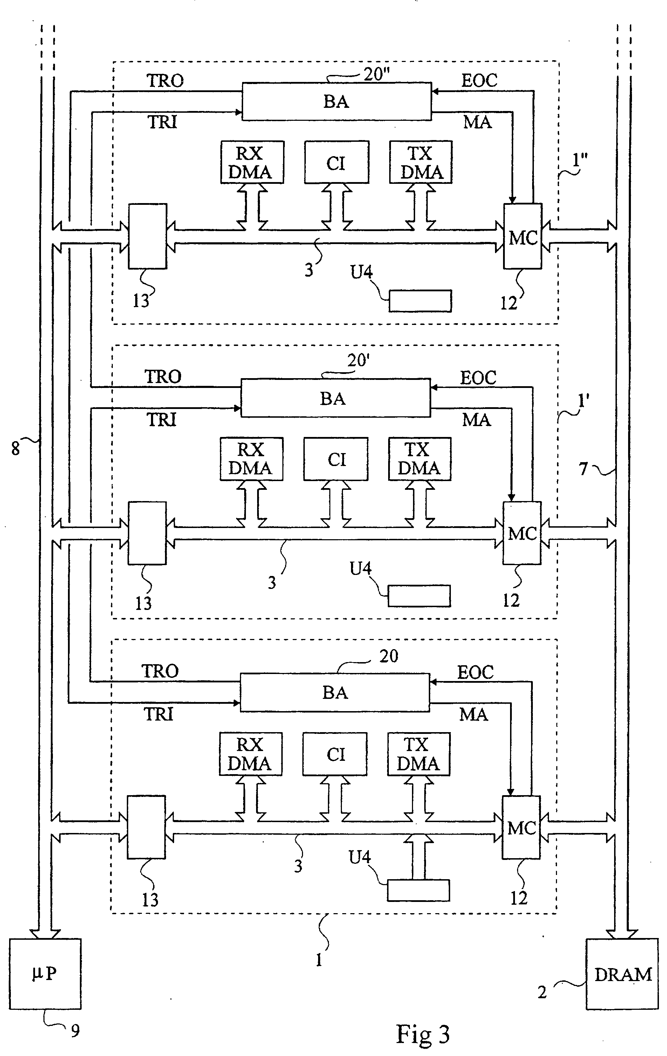

Le décodeur de priorité 21 reçoit, en outre, un signal TRI et délivre un signal TRO. Ces deux signaux sont liés à une possibilité, selon l'invention, de partager un même bus externe 7 entre plusieurs circuits HDLC 1 comportant chacun un dispositif d'arbitrage 20 comme on le verra en relation avec la figure 3.

Un avantage de la présente invention est que l'affectation du bus 3 à une entité U1, U2, U3, U4 ou au microprocesseur 9 s'effectue sans intervention du microprocesseur 9.

Un autre avantage de la présente invention est que les rangs de priorité affectés au microprocesseur 9 et aux entités U1, U2 et U3 peuvent être modifiés dynamiquement par un simple changement des codes contenus dans le registre programmable RP. La programmation de ce registre s'effectue de manière classique au moyen du microprocesseur 9.

Ce registre RP est, par exemple, un registre de huit bits qui contient un codage de la priorité affectée aux trois entités U1, U2, U3 (RX_DMA, TX_DMA, CI) et au microprocesseur 9. Comme cela a déjà été dit, la priorité du dispositif U4 de rafraîchissement d'une mémoire dynamique DRAM est gérée différemment.

Chacune des trois entités restantes (et le microprocesseur 9) est identifiée par un code de deux bits. Les huit bits du registre RP sont divisés en quatre paires de bits, respectivement {P10, P11}, (P20, P21}, (P30, P31} et (P40, P41}. Le rang de priorité d'une entité est déterminé par la paire de bits dans laquelle est introduit le code qui l'identifie. Les bits contenus dans la paire {P10, P11} correspondent aux bits d'identification de l'entité possédant le rang de priorité le plus élevé parmi les entités (U1, U2, U3 et 9) qui sont codées. Le code identifiant l'entité dont le rang de priorité est le plus faible est contenu dans la paire (P40, P41}.

Un caractéristique de la présente invention est que le décodeur de priorité 21 travaille, en réalité, non pas sur quatre mais sur six rangs de priorité. En effet, deux rangs de priorité supplémentaires sont affectés au dispositif de rafraîchissement U4 si la mémoire 2 est une mémoire dynamique DRAM. En désignant par P1, P2, P3 et P4 les rangs de priorité affectés de manière programmée aux entités U1, U2, U3 et au microprocesseur 9, les deux rangs supplémentaires affectés au dispositif de rafraîchissement U4 sont P0 et P5. Le rang P0 est le rang de priorité absolue tandis que le rang P5 est le rang de priorité le plus faible.

On affecte donc, selon l'invention, deux rangs de priorité au dispositif de rafraîchissement U4. On utilise pour cela le fait qu'un rafraîchissement d'une mémoire dynamique n'est pas effectué de manière aléatoire, mais périodiquement, et que ce rafraîchissement n'est pas réalisé en une seule fois pour toute la mémoire mais par parties de celle-ci.

Classiquement, la période entre deux accès mémoire d'un dispositif de rafraîchissement est fixe et on attribue au dispositif de rafraîchissement le rang de priorité le plus élevé. On ne peut en effet pas se permettre, sous peine de perdre le contenu de la mémoire, que celle-ci ne soit pas rafraîchie pendant une durée trop longue sous prétexte que d'autres entités, qui auraient été données prioritaires par rapport au rafraîchissement, demandent l'accès à la mémoire 2 en même temps que ce dispositif. Classiquement, le dispositif de rafraîchissement se voit donc affecter la mémoire 2 dès qu'il la demande, par exemple toutes les 15 microsecondes, pendant au moins la durée d'un cycle de lecture. En fait, le rafraîchissement complet de la mémoire 2 est beaucoup plus long (de l'ordre de 1 à 8 millisecondes selon la capacité de la mémoire 2) mais ne s'effectue pas en une seule fois.

Selon l'invention, le dispositif de rafraîchissement U4 se voit attribuer, soit le rang P5 de priorité le plus faible, soit le rang P0 de priorité le plus élevé et ce, selon la satisfaction qui lui a été donnée pendant qu'il est dans une période où il dispose du rang P5 de priorité le plus faible.

En d'autres termes, pendant une première demi-période (par exemple de 7,5 microsecondes) de l'intervalle régulier (par exemple, 15 microsecondes) entre deux demandes de rafraîchissement, le rang de priorité de l'entité U4 est P5, c'est-à-dire qu'elle n'aura accès au bus interne 3 que si ce dernier est libre. Si sa demande est satisfaite pendant cette demi-période, son rang de priorité n'est pas modifié jusqu'à la première demi-période de l'intervalle suivant. Si par contre, sa demande n'a pas été satisfaite pendant la première demi-période, elle se voit alors affecter le rang de priorité absolue P0 pendant la seconde demi-période de l'intervalle régulier entre deux de ses demandes d'accès.

Ainsi, le dispositif de rafraîchissement U4 a accès au bus interne 3, donc à la mémoire 2, de manière régulière mais pas périodique. Il a accès au bus 3 une fois par intervalle de 15 microsecondes mais n'importe où entre le début de cet intervalle et la première apparition d'une impulsion sur le signal EOC dans la seconde demi-période de cet intervalle.

Un avantage de la présente invention est que, comme il y a une probabilité très importante pour que la demande au rang P5 de l'entité U4 soit satisfaite pendant la première demi-période, les autres entités ne sont pas pénalisées en cas d'un afflux temporaire de demandes simultanées. On assure cependant la sécurité du rafraîchissement en la rendant prioritaire si l'afflux de demandes se prolonge au-delà de cette première demi-période.

Le choix de la demi-période comme limite de changement du rang de la priorité du dispositif de rafraîchissement U4 permet que le traitement de cette priorité soit particulièrement simple. En effet, il suffit d'utiliser le signal périodique de demande d'accès REQ4 délivré par l'entité U4 et d'effectuer une division par deux de sa période, pour obtenir un signal binaire pouvant refléter de sa priorité.

Selon l'invention, le rang de priorité programmable le plus élevé P1 est affecté au contrôleur RX_DMA U1 pour que les informations et données relatives aux communications qui arrivent sur les liaisons de données (non représentées) soient stockées le plus vite possible. Le rang de priorité P2 est affecté au contrôleur TX_DMA U2. Le rang de priorité P3 est affecté au contrôleur d'interruptions CI U3 et le rang de priorité P4 est affecté au microprocesseur 9.

De préférence, la logique du décodeur de priorité 21 est réalisée de manière à ce que, en cas de demandes simultanées, une même entité ne puisse se voir attribuer le bus interne 3, donc la mémoire 2, pendant deux cycles de lecture ou d'écriture successifs. En d'autres termes, une entité qui vient d'avoir accès au bus 3 doit patienter, au moins pendant un cycle mémoire, si une autre demande émanant d'une autre entité est en attente et ce, même si elle dispose du rang de priorité relative (c'est-à-dire parmi les entités qui présentent des demandes d'accès) le plus élevé. On évite ainsi qu'une même entité qui dispose de la priorité relative la plus élevée monopolise le bus 2.

Un avantage de la présente invention est qu'en cas d'afflux de demandes d'accès, il n'y a pas d'attente entre la fin d'un cycle de lecture ou d'écriture de la mémoire 2 et le début du cycle suivant. Les cycles de lecture ou d'écriture de la mémoire 2 peuvent donc, selon l'invention, être jointifs. Il n'y a donc pas de perte de temps occasionnée par l'organisation des accès au bus interne 3. Si une ou plusieurs entités demandent l'accès au bus 3, celles-ci seront satisfaites sans perte de temps entre deux cycles mémoire.

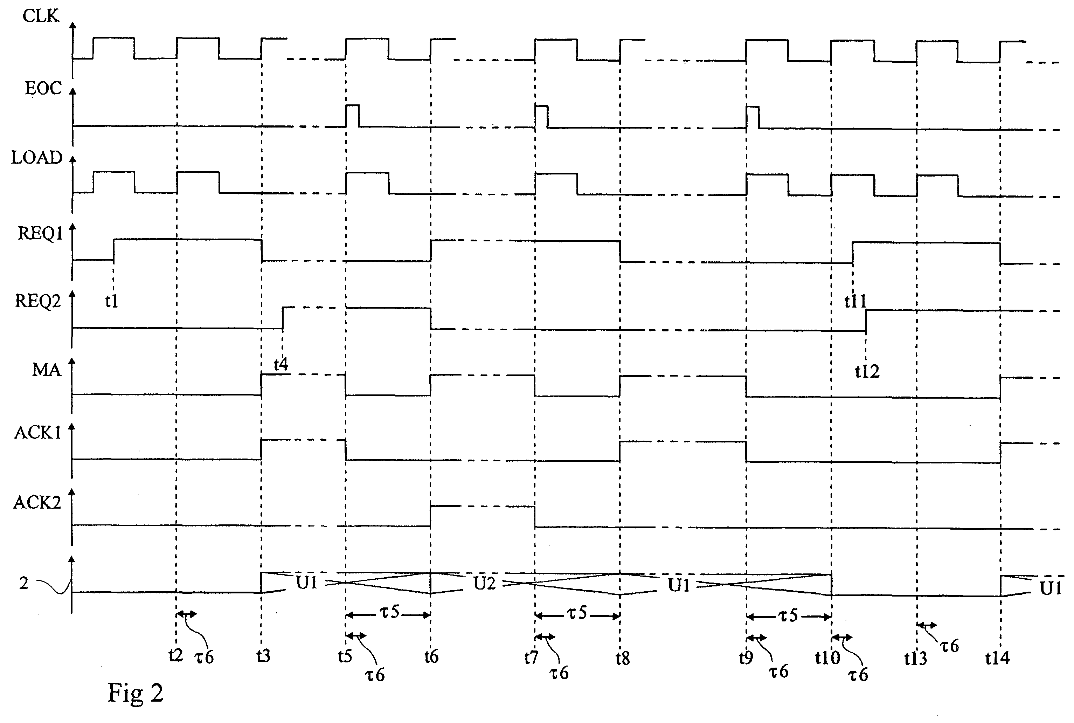

Cette caractéristique de la présente invention sera mieux comprise en relation avec la description de la figure 2 qui suit.

La figure 2 représente, sous forme de chronogrammes, un exemple d'une situation d'arbitrage d'accès au bus interne 3 par le dispositif 20. Pour des raisons de clarté, on a considéré pour l'établissement de cette figure que seuls les contrôleurs DMA, RX_DMA U1 et TX_DMA U2, étaient susceptibles d'avoir besoin d'accéder à la mémoire 2.

La figure 2 représente les chronogrammes des signaux CLK, EOC, LOAD, REQ1, REQ2, MA, ACK1 et ACK2 et des cycles de la mémoire 2. Pour des raisons de clarté, ces chronogrammes ne sont pas à l'échelle.

On suppose qu'aucune requête n'est présente avant un instant t₁ où le contrôleur RX_DMA U1 positionne le signal REQ1 à l'état "1". Avant l'instant t₁, le signal LOAD provoque donc le chargement des états des signaux REQ1 et REQ2 de façon périodique en suivant les cycles du signal d'horloge CLK (le signal MA est à l'état "0").

A l'instant t₁, l'entité U1 demande l'accès au bus interne 3. Le chargement de cette demande intervient au front montant suivant (instant t₂) du signal CLK.

On suppose que le décodeur de priorité 21 a besoin d'un délai t₆ pour examiner les demandes d'accès et délivrer une autorisation d'accès. Ce délai dépend de la logique du décodeur de priorité 21. On suppose que ce délai est inférieur à la période du signal CLK. Cette condition est aisément réalisable en pratique. Par exemple, la fréquence du signal d'horloge CLK est de l'ordre de 32 MHz et le délai t₆ nécessaire au décodage de la priorité est de l'ordre de 10 nanosecondes.

Ainsi, à un instant t₃ qui correspond au front montant suivant du signal CLK, le décodeur 21 positionne les signaux ACK1 et MA à l'état "1". Le passage du signal ACK1 à l'état "1" conduit à ce que le signal REQ1 passe à l'état "0", le contrôleur RX_DMA se considérant servi. Le passage du signal MA à l'état "1" signale au contrôleur mémoire 12 le début d'un premier cycle de lecture ou d'écriture dans la mémoire 2. En pratique, le début du cycle mémoire est quelque peu retardé par rapport au passage du signal MA à l'état "1".

A un instant t₅, le contrôleur mémoire 12 délivre une impulsion sur le signal EOC. Cette impulsion est, selon l'invention, délivrée avant la fin du cycle mémoire qui intervient à un instant t₆, après un délai t₅ par rapport cette impulsion. Comme le contrôleur mémoire 12 connaît la durée d'un cycle mémoire, il est possible de le configurer pour qu'il délivre l'impulsion du signal EOC en avance par rapport à la fin d'un cycle mémoire et toujours avec le même délai t₅. Cela permet que le décodeur de priorité 21 anticipe la fin d'un cycle mémoire. Le délai t₅ est fonction du temps de traitement des demandes d'accès par le dispositif 20 (temps t₆ et temps nécessaire à la synchronisation par le registre RS).

Selon l'invention, le contrôleur mémoire 12 du circuit 1 est, pour ce faire, associé à un registre programmable (non représenté) dont le contenu permet au contrôleur 12 d'identifier le type, la capacité, et la vitesse de la mémoire 2 qu'il est chargé de commander.

A l'instant t₅ et sous l'effet de l'impulsion du signal EOC, les signaux MA et ACK1 repassent à l'état "0". Le signal LOAD passe à l'état "1" pendant l'impulsion du signal EOC ce qui permet le chargement des états des signaux REQ1 et REQ2 à l'instant t₅. Pour des raisons de clarté, on n'a pas tenu compte du retard du passage à l'état "0" des signaux MA et ACK1 par rapport à l'apparition de l'impulsion sur le signal EOC. En pratique, l'impulsion sur le signal EOC apparaît durant l'avant dernière période du signal CLK contenue dans le cycle mémoire pour que le signal MA passe à l'état "0" au front montant (ici, l'instant t₅) du signal CLK qui précède la fin du cycle mémoire.

Ainsi, le décodeur 21 examine les signaux REQ1 et REQ2 pendant le dernier cycle d'horloge du cycle mémoire en cours. On suppose que le contrôleur TX_DMA U2 a émis une demande d'accès à un instant t₄ durant le premier cycle mémoire. Cette demande se trouve chargée dans le registre RE à l'instant t₅. Même si on suppose que le contrôleur RX_DMA souhaite effectuer deux cycles successifs d'écriture ou de lecture dans la mémoire 2, son signal REQ1 reste cependant à l'état "0" jusqu'à l'instant t₆ qui correspond à la fin réelle du cycle mémoire en cours. En effet, le contrôleur RX_DMA ne positionne pas son signal REQ1 tant que le cycle mémoire n'est pas terminé dans la mesure où il a encore accès au bus interne 3.

Or, à cet instant t₆, le décodeur 21 positionne les signaux MA et REQ2 à l'état "1" pour donner l'accès au bus 3 au contrôleur TX_DMA. Ainsi, même si le contrôleur RX_DMA est prioritaire devant le contrôleur TX _DMA, sa nouvelle demande d'accès successive ne pourra être satisfaite qu'à la fin du deuxième cycle mémoire qui est utilisé par le contrôleur TX_DMA. On évite ainsi que le contrôleur RX_DMA monopolise le bus interne 3.

Un autre avantage d'un tel décodage de priorité anticipé par rapport à la fin réelle d'un cycle mémoire est que cela permet de rendre les cycles mémoire jointifs en cas d'afflux de demandes d'accès. En effet, l'instant t₆ correspond à la fois à la fin du premier cycle mémoire et au début du deuxième cycle mémoire.

A un instant t₇ où apparaît, sur le signal EOC, une impulsion indicatrice de la fin proche du deuxième cycle mémoire, l'état "1" du signal REQ1 et l'état "0" du signal REQ2 sont chargés dans le registre RE. Ainsi, un nouvel accès au bus 3 est donné au contrôleur RX_DMA, à un instant t₈.

On suppose qu'à la fin (instant t₁₀) du troisième cycle mémoire, plus précisément entre un instant t₉ où apparaît une impulsion sur le signal EOC et la fin réelle (instant t₁₀) du cycle mémoire, aucune demande d'accès n'est présente et que le contrôleur RX_DMA ne souhaite pas immédiatement un nouvel accès. On revient donc dans un fonctionnement d'examen périodique des demandes d'accès sous commande du signal CLK.

On suppose que les contrôleurs RX_DMA et TX_DMA demandent tous deux un accès au bus 3, respectivement à des instants t₁₁ et t₁₂, compris dans une même période du signal CLK. Le fait que les instants t₁₁ et t₁₂ sont, ou non, simultanés n'a aucune importance.

A l'apparition du front montant suivant (instant t₁₃) du signal CLK, le signal LOAD passe à l'état "1" et le décodeur 21 examine les demandes d'accès qui sont chargées dans le registre RE. Comme deux demandes d'accès sont présentes, le décodeur attribue le bus 3 à l'entité prioritaire, ici le contrôleur RX_DMA, à un instant t₁₄ qui correspond au front montant suivant du signal CLK.

Comme le contrôleur TX_DMA n'a pas été servi, le signal REQ2 reste à l'état "1" jusqu'à la fin du quatrième cycle mémoire attribué au contrôleur RX_DMA.

Le bus interne 3 sera attribué au contrôleur TX_DMA à la fin de ce quatrième cycle mémoire. Comme pour l'attribution du deuxième cycle mémoire, peu importe que le contrôleur RX _DMA redemande, ou non, un accès dans la mesure où cette nouvelle demande éventuelle n'intervient que postérieurement à l'attribution du bus 3 au contrôleur TX_DMA.

Un avantage de la présente invention est que le circuit HDLC 1 s'adapte à n'importe quelle mémoire vive 2 qu'elle soit statique ou dynamique et ce, quelle que soit sa taille et son temps de cycle. Le dispositif d'arbitrage 20 n'a en effet pas besoin d'être dédié à une mémoire particulière grâce à l'emploi des signaux EOC et MA et à la gestion éventuelle du rafraîchissement d'une mémoire dynamique DRAM.

Selon l'invention et toujours pour libérer le microprocesseur 9, le circuit HDLC 1 comporte son propre contrôleur d'interruptions CI U3. Le rôle de ce contrôleur d'interruptions est de permettre que le microprocesseur 9 puisse traiter les interruptions générées par des constituants du circuit HDLC 1 de manière différée. Ainsi, le microprocesseur 9 peut effectuer d'autres tâches liées à des périphériques connectés sur le bus externe 8 ou à d'autres circuits HDLC et ne traiter les interruptions du circuit 1 que lorsqu'il est disponible.

Pour ce faire, le contrôleur d'interruptions U3 est chargé d'organiser une mémorisation, dans la mémoire 2, des événements qui apparaissent sur les différents constituants du circuit HDLC 1. Outre les contrôleurs RX_DMA et TX_DMA, d'autres constituants du circuit 1 qui n'ont pas été représentés dans la mesure où ils n'ont pas besoin d'accéder directement à la mémoire 2 sont cependant reliés au contrôleur d'interruptions U3.

Par la mémorisation des interruptions, on permet ainsi au microprocesseur 9 d'extraire ces événements de la mémoire 2 lorsqu'il est disponible pour traiter une ou plusieurs interruptions.

Le contrôleur d'interruptions U3 gère les priorités associées aux différentes interruptions générées par différents constituants du circuit HDLC 1 en définissant des zones mémoire que le microprocesseur 9 viendra lire et en déterminant lui-même l'ordre dans lequel il les lira, c'est-à-dire en se donnant un ordre de priorité pour les zones mémoire considérées. Le contrôleur d'interruptions détermine l'adresse de la mémoire 2 dans laquelle un mot représentatif au moins de l'origine et de la nature de l'événement doit être stocké. Il se comporte à ce titre comme un contrôleur DMA.

Comme à la fois la gestion de la priorité des interruptions et la mémorisation des interruptions est organisée au sein du circuit HDLC 1 et par lui-même, le fait que les interruptions sont gérées en temps différé par le microprocesseur 9 n'est pas gênant. Il suffit pour cela que le microprocesseur 9 conserve, par exemple dans un registre, l'adresse de la mémoire 2 contenant la dernière interruption du circuit HDLC 1 qu'il a traitée.

La figure 3 illustre un mode de réalisation d'un anneau à "jeton" selon l'invention permettant le partage d'une même mémoire 2 entre plusieurs circuits HDLC 1, 1' et 1" conformes au circuit 1 représenté à la figure 1. L'invention permet, en effet, de partager le même bus externe 7, donc la même mémoire 2, entre plusieurs circuits HDLC au sein de chacun desquels est établi un ordre de priorité d'accès entre les contrôleurs RX_DMA, TX_DMA et CI.

Pour des raisons de clarté, l'exemple représenté ne comporte que trois circuits HDLC 1, 1' et 1". En pratique, le nombre maximal de circuit HDLC est fonction de la fréquence moyenne des besoins d'accès des différents circuits HDLC et du microprocesseur 9 à la mémoire 2.

A la figure 3, les détails des circuits HDLC 1, 1' et 1" n'ont pas été représentés. En particulier, les mémoires FIFO 10 et 11 (figure 1) n'ont pas été représentés bien qu'elles aient accès à la mémoire 2, dans la mesure où leurs accès sont commandés par les contrôleurs DMA U1 ou U2 auxquels elles sont respectivement associées. De même les signaux REQ0 à REQ4 et ACK0 à ACK4 n'ont pas été représentés.

Selon l'invention, le mode de partage est organisé en anneau, c'est-à-dire que les différents circuits HDLC se voient offrir, successivement, une affectation au bus externe 7 de la mémoire 2.

Le partage du bus externe 7 est géré par les circuits HDLC eux-mêmes. Pour ce faire, les dispositifs d'arbitrage BA, respectivement 20, 20' et 20" des circuits HDLC, respectivement 1, 1' et 1", sont reliés en anneau au moyen des signaux TRI et TRO par une liaison unifilaire. Le signal de sortie TRO du dispositif 20 est envoyé sur l'entrée du signal TRI du dispositif 20', le signal de sortie TRO du dispositif 20' est envoyé sur l'entrée du signal TRI du dispositif 20" et le signal de sortie TRO de ce dernier est envoyé sur l'entrée du signal TRI du dispositif 20. Le rôle de ces signaux TRI et TRO est de faire circuler un "jeton", sous la forme d'une impulsion, dans l'anneau. Chaque circuit HDLC 1, 1' ou 1" peut donner un accès au bus externe 7 lorsqu'il est en possession du "jeton".

Les accès à la mémoire 2 demandés par le microprocesseur 9 ne sont gérés que par le dispositif d'arbitrage 20 du circuit HDLC 1, choisi arbitrairement.

Chaque circuit HDLC comporte, de préférence et pour des raisons de standardisation du circuit, un dispositif de rafraîchissement U4 de la mémoire 2. Cependant, seul un de ces dispositifs de rafraîchissement est en fonctionnement, par exemple, celui du circuit HDLC 1. En effet et comme on le verra par la suite, la périodicité minimale des accès au bus externe 7 par le circuit HDLC 1 est supérieure à la périodicité des demandes du dispositif de rafraîchissement U4. Les dispositifs de rafraîchissement des autres circuits HDLC 1' et 1" sont inhibés, ils ont été symbolisés sans liaison avec les bus internes 3 auxquels ils sont respectivement associés.

Selon l'invention, à chaque fois qu'une impulsion véhiculée par le signal EOC d'un contrôleur mémoire 12 arrive sur le décodeur de priorité 21 (figure 1) du circuit HDLC auquel il est associé, le dispositif d'arbitrage de ce circuit qui dispose du "jeton" délivre une impulsion sur sa sortie TRO. Ainsi, le circuit HDLC suivant reçoit le "jeton" et peut affecter le bus externe 7 à une de ses entités par l'intermédiaire de son bus interne 3 et ainsi de suite. Lorsqu'un circuit HDLC dispose du "jeton" et qu'une entité de ce circuit souhaite accéder à la mémoire 2, le dispositif d'arbitrage de ce circuit HDLC positionne le signal MA à l'état "1". Si un dispositif d'arbitrage qui reçoit le "jeton" n'a, sur les entrées de son registre RE (figure 1), aucune demande d'accès émanant d'une de ses entités, il fait suivre immédiatement l'impulsion au circuit HDLC suivant par son signal TRO.

Le fait d'obliger la circulation du "jeton" à l'apparition d'une impulsion sur le signal EOC permet d'interdire qu'un circuit HDLC monopolise le bus externe 7 si un autre circuit en a besoin.

Un avantage d'une telle association est qu'elle permet de partager une même mémoire 2 entre un grand nombre de circuits HDLC sans avoir recours au microprocesseur 9 et en respectant un équilibre d'accès entre plusieurs circuits qui ont besoin du bus externe 7 simultanément. Ainsi, on peut associer à une même mémoire vive et à un même microprocesseur d'une carte d'abonnés, plusieurs circuits HDLC selon l'invention.

Un autre avantage de la présente invention est que la circulation du "jeton" interdit à une entité d'un circuit HDLC de disposer de l'accès au bus externe 7 pour effectuer deux cycles mémoire successifs si une autre entité du même circuit ou d'un autre circuit HDLC a également demandé l'accès. Par contre, si elle est la seule parmi toutes les entités de tous les circuits HDLC à demander l'accès à la mémoire 2, elle sera la seule à avoir accès au bus externe 7.

Si, par exemple, la durée d'un cycle mémoire est de l'ordre de 250 nanosecondes et que la période des cycles de rafraîchissement est de 15 microsecondes, on peut, en négligeant le temps nécessaire à la circulation du "jeton" dans l'anneau, raccorder jusqu'à 60 circuits HDLC sur le bus externe 7 sans que le rafraîchissement de la mémoire 2 soit remis en cause. En effet, par la circulation obligatoire du "jeton" à la fin de chaque cycle mémoire, on est sûr que le dispositif de rafraîchissement U4 associé au seul circuit HDLC 1 disposera du bus externe 7 au moins une fois par cycle de rafraîchissement.

Pour permettre la circulation du "jeton", chaque circuit HDLC 1, 1' ou 1" comporte, au sein du décodeur de priorité 21 de son dispositif d'arbitrage, respectivement 20, 20' ou 20", un dispositif de génération et de régénération de l'impulsion (non représenté à la figure 3).

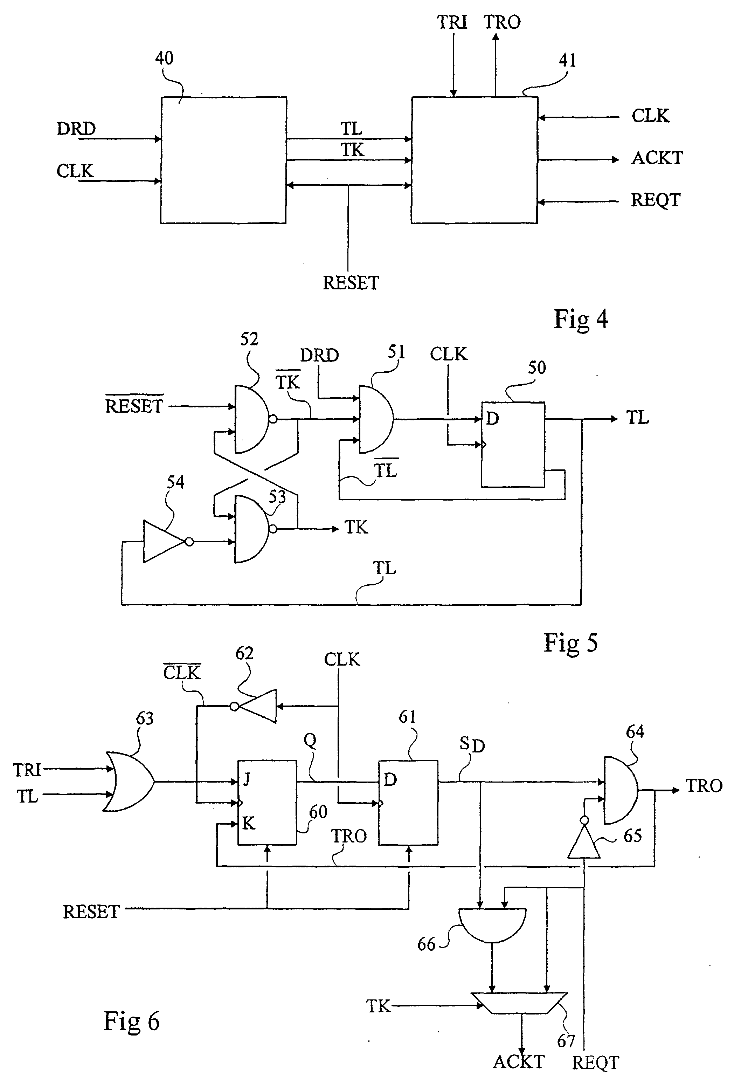

La figure 4 représente, un mode de réalisation d'un dispositif de génération et de régénération de l'impulsion constituant le "jeton" selon l'invention.

Un tel dispositif comporte un bloc 40 de génération initiale de l'impulsion constituant le "jeton" et un bloc 41 de régénération de l'impulsion lorsqu'elle circule sur l'anneau.

Le bloc 40 a pour rôle de générer une impulsion à la mise en route du circuit ou suite à une réinitialisation déclenchée par une impulsion sur un signal RESET. Le signal RESET sert, comme on le verra par la suite, soit à générer un nouveau "jeton", soit à permettre un fonctionnement local d'un circuit HDLC 1, 1' ou 1". Le bloc 40 reçoit, du microprocesseur 9, un bit DRD qui est à l'état "1" pendant les périodes où l'anneau doit fonctionner et qui est à l'état "0" hors de ces périodes, par exemple, pour un fonctionnement local d'un des circuits HDLC. Le "jeton" devant être généré initialement par un seul des circuits HDLC 1, 1' ou 1", un seul circuit HDLC, choisi arbitrairement, a son bit DRD positionné à l'état "1".

Le bloc 40 délivre au bloc 41 un signal TL porteur du "jeton" qu'il délivre initialement ainsi qu'un signal binaire TK de validation du "jeton".

Le bloc 41 a pour rôle de recevoir le "jeton" véhiculé par le signal TRI et, soit de redélivrer quasi-immédiatement le "jeton" sur le signal TRO si aucune des entités qui lui sont associées n'a demandé d'accès, soit de redélivrer le "jeton" à la fin d'un cycle mémoire qu'il attribue à une des entités qui lui sont associées.

Le bloc 41 reçoit, outre le signal RESET délivré par le microprocesseur 9 et les signaux TRI, TK et TL, un signal binaire REQT indicateur, par un état "1", de la présence d'une demande d'accès au sein du circuit 1, 1' ou 1" auquel il est associé. Ce signal REQT est positionné par le décodeur de priorité 21 du dispositif d'arbitrage 20, 20' ou 20" de ce circuit HDLC. Le signal REQT correspond, par exemple, à une combinaison logique de type "OU" des signaux REQ0 à REQ4, en entrée du registre RE (figure 1) avec le signal MA, le résultat de cette combinaison étant validé, par exemple, par une combinaison logique de type "ET" avec l'inverse du signal TRO et l'inverse du signal EOC.

Le bloc 41 délivre, outre le signal TRO, un signal binaire ACKT qui signale, par un état "1" , au décodeur de priorité 21 du dispositif 20, 20' ou 20" auquel il est associé et lorsque le signal REQT est à l'état "1", la présence du "jeton".

Selon l'invention, le signal REQT respecte également les conditions suivantes. Le signal REQT d'un dispositif d'arbitrage qui a accès à la mémoire 2 reste à l'état "1" pendant toute la durée d'un cycle mémoire (en fait, pendant que le signal MA à l'état "1") pour retenir le "jeton" jusqu'à la fin du cycle mémoire qu'il utilise. De plus, le passage à l'état "0" du signal REQT est forcé lors de la fin du cycle mémoire (en fait quelque peu avant la fin réelle du cycle, par exemple, à l'apparition d'une impulsion sur le signal EOC) pour obliger le lancement du "jeton", même si un des signaux REQ du circuit HDLC qui dispose de l'accès au bus externe 7 est à l'état "1" en entrée du registre RE, afin d'éviter que ce circuit HDLC monopolise le bus 7. En outre, on interdit le passage à l'état "1" du signal REQT pendant le cycle d'horloge où le "jeton" est lancé (signal TRO) pour éviter que le bloc 41 du dispositif d'arbitrage qui vient de lancer le "jeton" repasse le signal ACKT à l'état "1".

La réalisation pratique de la logique permettant l'obtention du signal REQT est à la portée de l'homme du métier en fonction des indications fonctionnelles données en relation avec les figures 4 à 6.

Les blocs 40 et 41 reçoivent en outre le signal d'horloge CLK. On veillera à ce que le signal CLK soit le même pour tous les circuits HDLC 1, 1' et 1" de l'anneau.

La figure 5 représente un exemple de réalisation du bloc 40 de génération initiale du "jeton".

Le "jeton" est initialement généré sous la forme d'une impulsion véhiculée par le signal TL délivré par une sortie non-inverseuse d'une bascule D 50. La bascule 50 est commandée par les fronts montants du signal d'horloge CLK. L'entrée D de cette bascule 50 est reliée à la sortie d'une porte logique "ET" 51 à trois entrées. Cette porte 51 reçoit le bit DRD, l'inverse du signal TL délivré par la sortie inverseuse de la bascule D 50 et l'inverse du signal TK. Le signal TK est produit par l'association de deux portes logiques "NON(ET)" 52 et 53 à deux entrées, montées en bistable. Une première porte 52 reçoit l'inverse du signal RESET ainsi que le signal TK de sortie d'une deuxième porte 53. Cette deuxième porte 53 reçoit l'inverse du signal TK délivré par la sortie de la porte 52 et l'inverse du signal TL délivré par un inverseur 54 dont l'entrée est reliée à la sortie non-inverseuse de la bascule D 50.

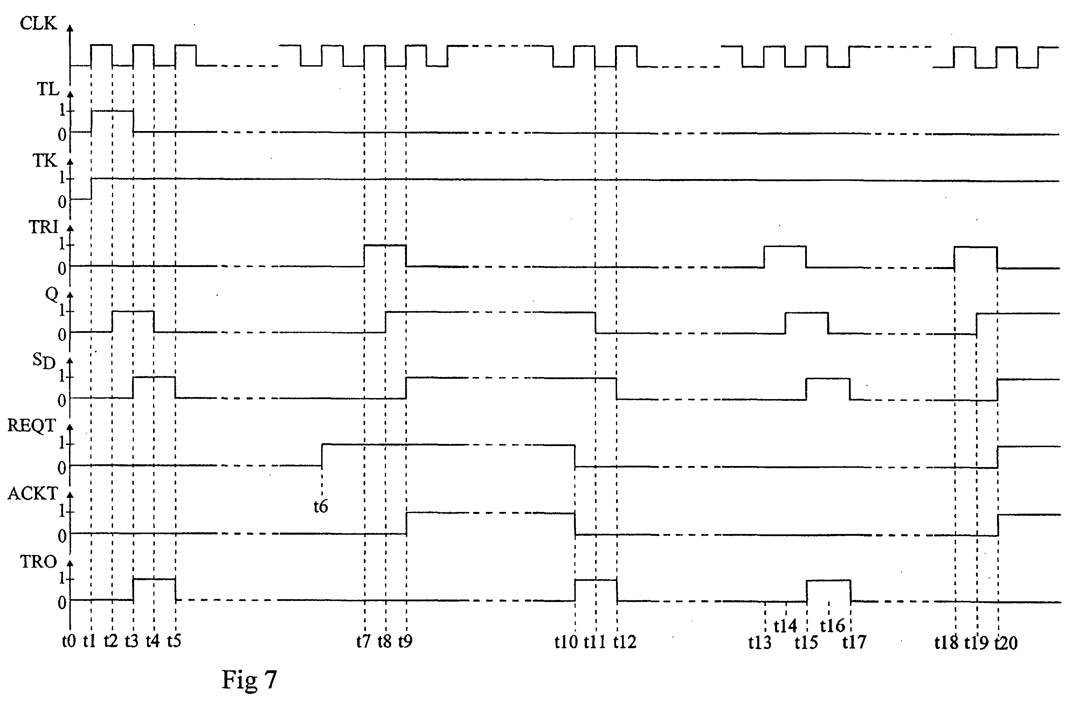

Le fonctionnement du bloc 40 sera mieux compris en relation avec la description de la figure 7.

La figure 6 représente un exemple de réalisation du bloc 41 de régénération du "jeton".

Le bloc 41 comporte une bascule JK 60 dont la sortie non-inverseuse Q est envoyée sur l'entrée d'une bascule D 61. La bascule D 61 est commandée par les fronts montants du signal d'horloge CLK tandis que la bascule JK 60 est commandée par les fronts descendants du signal CLK qui traverse, pour ce faire, un inverseur 62. La bascule JK 60 reçoit sur son entrée J une combinaison logique "OU" 63 des signaux TL et TRI. L'entrée K de la bascule JK 60 reçoit le signal TRO qui délivre le "jeton" régénéré. Le signal TRO est délivré par une porte logique "ET" 64 à deux entrées. Ces deux entrées sont reliées, respectivement, à la sortie non-inverseuse S_{D} de la bascule D 61 et à la sortie d'un inverseur 65 qui reçoit en entrée le signal REQT. La sortie S_{D} de la bascule D 61 est, de plus, combinée avec le signal REQT dans une porte logique "ET" 66. La sortie de la porte 66 est reliée à une première entrée d'un multiplexeur 67 dont une deuxième entrée reçoit le signal REQT. Le multiplexeur 67 est commandé par le signal TK délivré par le bloc 40. La première entrée du multiplexeur 67 est sélectionnée si le signal TK est à l'état "1".

La figure 7 illustre le fonctionnement des blocs 40 et 41. Cette figure représente, sous forme de chronogrammes, les signaux CLK, TL, TK, TRI, Q, S_{D}, REQT, ACKT et TRO durant une situation prise pour exemple. Ces signaux sont considérés du point de vue du circuit HDLC qui reçoit le bit DRD, par exemple, le circuit 1.

A la mise en route du circuit, on suppose que les signaux RESET, TRI, TRO et TL sont à l'état "0". L'inverse du signal TK est donc à l'état "1". Lorsque le microprocesseur 9 positionne le bit DRD à l'état "1" (instant t₀), la sortie de la porte 51 passe à l'état "1". Ainsi, lors du front montant suivant (instant t₁) de l'horloge CLK, le signal TL passe à l'état "1".

La sortie de l'inverseur 54 passe donc à l'état "0" ce qui provoque le passage à l'état "1" du signal TK en sortie de la porte 53. La sortie de la porte 52 passe alors à l'état "0". Dans le même temps, la sortie de la porte 63 (bloc 41) passe à l'état "1". Ainsi, lors du front descendant suivant (instant t₂) du signal CLK, la sortie Q de la bascule JK 60 passe à l'état "1".

La durée de l'impulsion délivrée par le signal TL correspond à une période du signal d'horloge CLK. En effet, lors du front montant suivant (instant t₃), le signal TL repasse à l'état "0" en raison du passage à l'état "0" de la porte 51 sous l'effet de l'inverse du signal TL et de l'inverse du signal TK. La sortie de l'inverseur 54 passe alors à l'état "1" ce qui maintient le signal TK à l'état "1".

A l'instant t₃, la sortie S_{D} de bascule D 61 passe à l'état "1". Comme le signal REQT est à l'état "0", le signal TRO passe à l'état "1". Au même instant, l'entrée J de la bascule JK passe à l'état "0".

La durée de l'impulsion, ou "jeton", délivré par le signal TRO est d'une période de l'horloge CLK. En effet, lors du front descendant suivant (instant t₄) du signal CLK, la sortie Q de la bascule JK passe à l'état "0" dans la mesure où son entrée K se trouve à "1". Ainsi, lors du front montant suivant (instant t₅) du signal d'horloge CLK, le signal TRO repasse à l'état "0".

Le "jeton" circule alors sur l'anneau pour être, le cas échéant, pris par d'autres circuits HDLC. On suppose que pendant ce temps, le signal REQT passe à l'état "1" (instant t₆) indiquant qu'au moins une entité du circuit HDLC 1 demande l'accès à la mémoire 2.

Lorsque le "jeton" arrive sur le signal TRI (instant t₇), la sortie de la porte 63 passe à l'état "0". Au front descendant suivant (instant t₈) du signal CLK, la sortie Q de la bascule JK 60 passe donc à l'état "1". Ainsi, lors du front montant suivant (instant t₉) du signal CLK, la sortie S_{D} de la bascule D 61 passe à l'état "1". Cela provoque le passage à l'état "1" de la sortie de la porte 66, et comme le signal TK est à l'état "1", le signal ACKT passe à l'état "1". Le décodeur de priorité 21 peut alors donner une autorisation d'accès au bus externe 7.

Selon l'invention, le signal LOAD délivré par le décodeur de priorité 21 est en fait une combinaison logique tenant compte, outre des signaux CLK, EOC et MA, du signal ACKT. Cela permet de ne charger les signaux REQ1 à REQ4 (figure 1), dans le registre RE, que lorsque le circuit HDLC 1 est en mesure d'autoriser un accès au bus externe 3. On évite ainsi qu'une première entité, par exemple le contrôleur RX_DMA, disposant d'un rang de priorité élevé soit doublée par une deuxième entité, par exemple, le contrôleur TX_DMA du même circuit 1 disposant d'un rang de priorité faible mais ayant émis une demande d'accès avant l'arrivée du "jeton" et avant la première entité. La réalisation pratique de la combinaison logique permettant l'obtention du signal LOAD est à la portée de l'homme du métier en fonction des indications fonctionnelles données ci-dessus.

En variante, le signal ACKT peut être remplacé par le signal TRI pour la validation du signal LOAD. L'utilisation du signal TRI permet d'anticiper, d'une période du signal d'horloge CLK, l'autorisation de délivrer un accès.

Comme le signal REQT est à l'état "1", le passage à l'état "1" du signal S_{D}, provoqué par le passage du signal TRI à l'état "0" à l'instant t₉, ne conduit pas au lancement du "jeton" sur le signal TRO.

Les signaux Q, S_{D}, ACKT restent à l'état "1" tant que le signal REQT ne repasse pas à l'état "0". En effet, bien que l'entrée J de la bascule JK 60 passe à l'état "0" à l'instant t₉, celle-ci conserve son état de sortie, c'est-à-dire Q à l'état "1", tant que son entrée K ne repasse pas à l'état "1". Sauf action du signal RESET, le basculement de la sortie S_{D} de la bascule 60 ne peut donc être provoqué que par le lancement du "jeton", donc par le passage à l'état "0" du signal REQT. Or, le signal REQT reste à l'état "1" jusqu'à l'apparition d'une impulsion sur le signal EOC même si tous les signaux REQ0 à REQ4 en entrée du registre RE sont à l'état "0". Le "jeton" est donc retenu pendant toute la durée du cycle mémoire.

A l'apparition d'une impulsion sur le signal EOC indiquant la fin proche du cycle mémoire, le signal REQT passe à l'état "0" (instant t₁₀). A cet instant, la sortie de la porte 66 passe alors à l'état "0" provoquant le passage à l'état "0" du signal ACKT. La sortie de la porte 64 passe alors à l'état "1". Ainsi, le "jeton" est lancé avant la fin réelle du cycle mémoire.

Le passage à l'état "1" du signal TRO provoque, au front descendant suivant (instant t₁₁) du signal CLK, le passage à l'état "0" de la sortie Q de la bascule JK 60. Au front montant suivant (instant t₁₂) du signal CLK, la sortie S_{D} de la bascule D 61 passe à l'état "0" ce qui provoque le passage à l'état "0" du signal TRO.

On notera que pendant le lancement du "jeton", c'est-à-dire pendant que le signal TRO est à l'état "1", le signal REQT est bloqué à l'état "0" même si un des signaux REQ0 à REQ4 en entrée du registre RE est à l'état "1". On évite ainsi, que le "jeton" soit partiellement lancé et que le signal ACKT repasse à l'état "1". De plus, on oblige le "jeton" à circuler pour éviter qu'un même circuit HDLC monopolise le bus externe 7, donc la mémoire 2.

Lorsque le "jeton" revient dans le dispositif (instant t₁₃), si le signal REQT est à l'état "0" pendant toute la durée où le signal TRI est à l'état "1", le "jeton" est régénéré quasi-immédiatement. Le fonctionnement du bloc 41 entre les instants t₁₃, t₁₄, t₁₅, t₁₆ et t₁₇ est similaire au fonctionnement décrit pour les instants t₁ à t₅.

On constate donc que la génération ou régénération quasi-immédiate du "jeton" dure en fait une période du signal de l'horloge CLK.

La limite d'apparition d'une demande d'accès par une entité d'un circuit HDLC lorsque le dispositif d'arbitrage associé à ce dernier dispose du "jeton" est illustré par les instants t₁₈ à t₂₀. Pour que le dispositif d'arbitrage retienne le "jeton", il suffit que le signal REQT passe à l'état "1" avant la fin de l'arrivée du "jeton", c'est-à-dire avant que le signal TRI repasse à l'état "0".

On notera que si le signal REQT est à l'état "1" lors de la génération initiale du "jeton" (instant t₁ à t₃), le signal TL a les mêmes effets que le signal TRI de l'instant t₁₀ ou de l'instant t₁₈. On notera également que le "jeton" est synchrone avec le signal d'horloge CLK.

Le signal RESET permet de supprimer le "jeton" quel que soit le circuit HDLC dans lequel il se trouve et de provoquer la génération d'un nouveau "jeton" lors de la période suivante du signal CLK. Les portes 52 et 53 du bloc 40 permettent la génération de ce nouveau "jeton", même si le signal RESET ne véhicule qu'une impulsion et qu'il est repassé à l'état "0" lorsque apparaît le front montant de cette période suivante.

Le signal TK permet, si seul un circuit HDLC, par exemple le circuit 1, doit être autorisé à avoir accès à la mémoire 2, d'éviter la circulation du "jeton" et de faire fonctionner le dispositif d'arbitrage 20 de ce circuit 1 en mode local. Le circuit HDLC 1 retrouve alors des cycles mémoire jointifs en cas d'afflux de demande d'accès de la part des entités qui lui sont associées. Pour ce faire, le bit DRD est positionné à l'état "0" pour empêcher la génération d'un "jeton" et le signal RESET du dispositif 1 est positionné à "1" tandis que les signaux RESET des autres dispositifs 1' et 1" sont maintenus à l'état "0". Les dispositifs d'arbitrage 20' et 20" ont leur signal TK à l'état "1" et attendent un "jeton" qui ne viendra pas tandis que le dispositif d'arbitrage 20 fonctionne comme s'il possédait le "jeton" en permanence car son signal TK est à l'état "0". En effet, dès que le signal REQT du circuit 1 passe à l'état "1", son signal ACKT passe à l'état "1" en raison de la sélection de la deuxième entrée du multiplexeur 67. Un tel mode de fonctionnement peut servir, par exemple, lorsque seul un des circuits HDLC est en marche. Le "jeton" est alors établi automatiquement, sous commande du microprocesseur 9, dès qu'un autre circuit HDLC 1' ou 1" est mis en marche.

On notera que, même si le bit DRD du dispositif 20 est à l'état "1", le "jeton" ne sera pas lancé par ce dispositif dans la mesure où le signal RESET est maintenu à l'état "1" ce qui force le signal S_{D} à l'état "0". Cependant, le signal TL du dispositif 20 reproduit, dans ce cas, le signal CLK, ce qui entraîne une consommation d'énergie.

Le fait que chaque circuit HDLC 1, 1' ou 1" comporte un contrôleur mémoire 12 n'est nullement gênant pour le fonctionnement de l'anneau et des signaux EOC et MA. En effet, deux signaux MA, respectivement associés à deux contrôleurs mémoire 12, ne peuvent pas être simultanément à l'état "1" dans la mesure où le passage à l'état "1" d'un signal MA ne peut être provoqué que par le dispositif d'arbitrage 20, 20' ou 20" qui dispose du "jeton".

De plus, même si chaque contrôleur mémoire 12 génère une impulsion sur son signal EOC à chaque fin de cycle mémoire, que le cycle ait été, ou non, utilisé par le circuit HDLC auquel il est associé, seul le circuit HDLC qui reçoit le "jeton" peut demander un accès au bus externe 7.

En variante, seul le contrôleur mémoire 12 dont le signal MA est à l'état "1" génère, selon l'invention, une impulsion à la fin d'un cycle mémoire sur son signal EOC.

Un avantage de la présente invention est qu'elle permet d'optimiser les accès à la mémoire 2 entre plusieurs circuits HDLC et le microprocesseur 9, tout en libérant le microprocesseur 9 pour effectuer d'autres tâches.

En effet, le bus externe 8 du microprocesseur 9 est libre pendant qu'un circuit HDLC a accès à la mémoire 2. Ainsi, le microprocesseur 9 peut, en même temps que la mémoire 2 est utilisée; effectuer diverses tâches (à l'exception d'un accès à la mémoire 2), le cas échéant, en communiquant par l'intermédiaire du bus externe 8 avec d'autres circuits HDLC ou d'autres périphériques.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

## Revendications

1. Circuit intégré (1) de commande de liaisons de données, HDLC, du type comportant au moins un contrôleur HDLC et deux contrôleurs d'accès mémoire direct (RX_DMA, TX_DMA), **caractérisé en ce qu'**il comporte des moyens (20) pour organiser l'accès à un premier bus externe (7) de liaison à une mémoire externe (2), par l'intermédiaire d'un bus interne (3) sur lequel sont reliées différentes entités ayant besoin d'accéder à ladite mémoire externe et dont trois d'entre elles sont respectivement constituées d'un contrôleur DMA (U1) de réception (RX_DMA), d'un contrôleur DMA (U2) d'émission (TX_DMA) et d'un contrôleur d'interruption (U3), ledit bus interne (3) étant relié au premier bus externe (7) par l'intermédiaire d'un contrôleur mémoire (12) intégré audit circuit HDLC et constituant une interface électrique entre le bus interne et le premier bus externe.

2. Circuit HDLC selon la revendication 1, **caractérisé en ce qu'**un microprocesseur (9) externe audit circuit (1) est également relié audit bus interne (3) par l'intermédiaire d'un second bus externe (8), ledit bus interne (3) étant relié audit second bus externe (8) par l'intermédiaire d'une interface (13) intégrée audit circuit HDLC (1), les accès dudit microprocesseur (9) audit bus interne (3) étant gérés par ledit circuit HDLC (1) qui considère le microprocesseur (9), à ce titre et par l'intermédiaire de son interface (13), comme une de ses entités (U1, U2, U3, U4, 9).

3. Circuit HDLC selon la revendication 2, **caractérisé en ce que** ladite interface (13) est programmable par des broches dudit circuit HDLC (1) pour s'adapter à différents types de microprocesseur (9).

4. Circuit HDLC selon l'une quelconque des revendications 1 à 3, **caractérisé en ce que** ledit contrôleur mémoire (12) comporte des moyens programmables pour s'adapter à différents types, capacité, et vitesse d'accès de mémoire (2), une des entités dudit circuit HDLC (1) étant constituée d'un dispositif (U4) de rafraîchissement d'une mémoire (2) dynamique (DRAM).

5. Circuit HDLC selon l'une quelconque des revendications 1 à 4, caractérisé en que lesdits moyens d'organisation des accès audit bus interne (3) sont constitués d'un dispositif d'arbitrage (20) recevant des signaux binaires (REQ0, REQ1, REQ2, REQ3, REQ4) asynchrones représentant des demandes d'accès audit bus interne (3) émanant desdites entités (U1, U2, U3, U4, 9), le dispositif d'arbitrage (20) fournissant des signaux binaires (ACK0, ACK1, ACK2, ACK3, ACK4) d'autorisation d'accès auxdites entités (U1, U2, U3, U4, 9) sur la base d'une détermination de priorité entre les différentes demandes d'accès, au moyen d'un décodeur de priorité (21) en logique câblée associé à un registre d'entrée (RE), un chargement de l'état desdits signaux de demandes d'accès (REQ0, REQ1, REQ2, REQ3, REQ4) dans ledit registre d'entrée (RE) s'effectuant, si aucun cycle mémoire est en cours, périodiquement, au moyen d'un signal d'horloge (CLK) et, si un cycle mémoire est en cours, à l'apparition d'une impulsion sur un signal (EOC) délivré par ledit contrôleur mémoire (12) et anticipant la fin du cycle mémoire d'un délai (t₅) qui est fonction du temps de traitement des demandes d'accès par ledit décodeur de priorité (21).

6. Circuit HDLC selon la revendication 5, **caractérisé en ce que** ledit décodeur de priorité (21) envoie, audit contrôleur mémoire (12), un signal binaire (MA) indicateur de la présence d'une demande d'accès autorisée, le chargement desdits signaux (REQ0, REQ1, REQ2, REQ3, REQ4) indicateurs d'une demande d'accès dans ledit registre d'entrée (RE) étant validé par l'inverse dudit signal (MA) indicateur de la présence d'une demande d'accès autorisée.

7. Circuit HDLC selon les revendications 4 et, 5 ou 6, **caractérisé en ce que** ledit dispositif de rafraîchissement (U4) dispose d'une gestion particulière de priorité qui consiste à lui affecter le rang de priorité le plus faible (P5) pendant une demi-période de l'intervalle de temps qui sépare deux de ses demandes d'accès et le rang de priorité le plus élevé (P0) pendant la seconde demi-période de cet intervalle si sa demande d'accès n'a pu être satisfaite pendant ladite première demi-période.

8. Circuit HDLC selon la revendication 7, **caractérisé en ce que** le rang (P1, P2, P3, P4) de priorité associé à chaque entité (U1, U2, U3, 9), autre que ledit dispositif de rafraîchissement (U4), est contenu dans un registre programmable (RP) que comporte ledit dispositif d'arbitrage (20).

9. Circuit HDLC selon l'une quelconque des revendications 1 à 8, **caractérisé en ce que** ledit contrôleur d'interruptions (U3) comporte des moyens pour organiser la mémorisation de mots représentatifs au moins de l'origine et de la nature des interruptions émises par différents constituants dudit circuit HDLC (1) dans plusieurs zones de ladite mémoire (2).

10. Circuit HDLC selon l'une quelconque des revendications 5 à 8, caractérisé en ce son dispositif d'arbitrage (20) comporte des moyens (40, 41) pour être raccordé à d'autres dispositifs d'arbitrage (20) de circuits HDLC (1', 1") du même type afin d'organiser un partage de ladite mémoire (2) entre plusieurs circuits HDLC (1, 1', 1"), l'affectation dudit premier bus externe (7) à un desdits circuits HDLC (1, 1', 1") s'effectuant par la circulation d'une impulsion, ou "jeton", dans une liaison unifilaire reliant les différents circuits (1, 1', 1") en anneau, chaque circuit HDLC (1, 1', 1") recevant ledit "jeton" sur un signal d'entrée (TRI) envoyé par un circuit HDLC précédent (1", 1, 1') sur un signal de sortie (TRO).

11. Circuit HDLC selon la revendication 10, **caractérisé en ce que** lesdits moyens (40, 41) servent en outre à valider l'attribution du bus interne (3) à une desdites entités (U1, U2, U3, U4, 9) du circuit HDLC (1) lorsque ledit "jeton" est présent dans ledit dispositif d'arbitrage (20) qu'il comporte.

12. Circuit HDLC selon la revendication 10 ou 11, **caractérisé en ce que** l'envoi dudit "jeton" par ledit dispositif d'arbitrage (20) sur ledit signal de sortie (TRO) est déclenché, soit par l'apparition dudit signal (EOC) indicateur de la fin d'un cycle mémoire, soit par l'absence de demande d'accès de la part des entités (U1, U2, U3, U4, 9) du circuit HDLC (1, 1', 1") auquel il est associé pendant que ledit "jeton" est présent sur ledit signal d'entrée (TRI).

13. Circuit HDLC selon l'une quelconque des revendications 10 à 12, **caractérisé en ce que** lesdits moyens comportent un bloc (41) de régénération dudit "jeton", ledit bloc de régénération (41) recevant, outre le signal d'entrée (TRI), un signal binaire (REQT) indicateur de l'existence d'une demande d'accès au sein dudit circuit HDLC (1, 1', 1") auquel il est associé et délivrant, audit décodeur de priorité (21) du dispositif d'arbitrage (20, 20', 20") auquel il est associé, un signal binaire (ACKT) indicateur d'une affectation dudit "jeton", la largeur de l'impulsion constituant ledit "jeton" correspondant à une période dudit signal d'horloge (CLK).

## Patentansprüche

1. Integrierte Schaltung (1) zur Steuerung von Datenverbindungen (HDLC-Schaltung, 'high level data link' circuit; Hochpegel- Datenleitsteuer-Schaltung) vom Typ mit wenigstens einer HDLC - Steuervorrichtung und zwei Direkt-Speicherzugriff-Steuervorrichtungen (RX_DMA, TX_DMA), ***dadurch gekennzeichnet*, daß** die Schaltung Mittel ( 20 ) aufweist zur Organisation des Zugriffs zu einem ersten externen Bus (7) zur Verbindung mit einem externen Speicher ( 2 ) , vermittels einem internen Bus ( 3 ) , mit welchem verschiedene Entitäten bzw. Objekte verbunden sind, welche einen Zugriff auf den genannten externen Speicher benötigen, und von welchen drei jeweils aus einer DMA- (direct memory access) -Empfangssteuerung ( U1 ) (RX_DMA), einer DMA- (U2) Emissionssteuesteuerung (TX_DMA ) und einer Unterbrechungs- bzw. Interrupt-Steuerung (U3 ) bestehen, wobei der genannte interne Bus ( 3 ) mit dem ersten externen Bus ( 7 ) über eine in die genannte HDLC - Steuerung integrierte Speichersteuerung ( 12 ) verbunden ist und ein elektrisches Interface zwischen dem internen Bus und dem ersten externen Bus bildet.

2. HDLC - Schaltung nach Anspruch 1 , **dadurch gekennzeichnet, daß** ein bezüglich der genannten Schaltung ( 1 ) externer Mikroprozessor ( 9 ) auch mit dem internen Bus ( 3 ) über einen zweiten externen Bus ( 8 ) verbunden ist, daß der genannte interne Bus (3) mit dem genannten zweiten externen Bus ( 8 ) über ein in die genannte HDLC - Schaltung ( 1 ) integriertes Interface ( 13 ) verbunden ist, wobei die Zugriffe des genannten Mikroprozessors ( 9 ) auf den genannten internen Bus ( 3 ) durch die genannte HDLC .- Schaltung ( 1 ) verwaltet werden, welche den Mikroprozessor ( 9 ) in dieser Hinsicht und vermittels seines Interface ( 13 ) als eine ihrer Identitäten bzw. eines ihrer Objekte (U1, U2, U3, U4, 9 ) betrachtet.

3. HDLC - Schaltung nach Anspruch 2, dadurch gekenmnzeichnet, daß das genannte Interface (13 ) mittels Pins der genannten HDLC - Schaltung ( 1 ) zur Anpassung an unterschiedliche Typen von Mikroprozessoren ( 9 ) programmierbar ist.

4. HDLC - Schaltung nach einem der Ansprüche 1 bis 3, **dadurch gekennzeichnet, daß** die genannte Speichersteuerung (12 ) programmierbare Mittel zur Anpassung an unterschiedliche Typen , Kapazität, und Zugriffsgeschwindigkeit des Speichers ( 2 ) aufweist, und daß eine der Entitäten bzw. Objekte der genannten HDLC -. Schaltung ( 1 ) aus einer Vorrichtung (U 4) zur Auffrischung eines dynamischen Speichers (DRAM - Speichers) (2 ) besteht.

5. HDLC - Schaltung nach einem der Ansprüche 1 bis 4, **dadurch gekennzeichnet, daß** die genannten Mittel zur Organisation der Zugriffe auf den genannten internen Bus (3) aus einer Arbitrage- bzw. Schlichtungsvorrichtung ( 20 ) bestehen, die asynchrone Binärsignale (REQ0 , REQ 1, REQ 2, REQ 3, REQ 4 ) zugeführt erhält, welche von den genannten Objekten bzw. Entitäten (U 1, U 2, U 3, U 4, 9 ) ausgehende Anforderungen für Zugriff zu dem internen Bus ( 3 ) darstellen, daß die Arbitriervorrichtung ( 20 ) Binärsignale (ACK 0 , ACK 1, ACK 2, ACK3, ACK4 ) abgibt, welche den Zugriff zu den genannten Objekten bzw. Entitäten (U1, U2, U3, U4, 9 ) autorisieren, auf der Grundlage einer Prioritätsbestimmung zwischen den verschiedenen Zugriffsanforderungen mithilfe eines einem Eingangsregister (RE ) zugeordneten, in verdrahteter Logik ausgeführten Prioritätsdekoders (21 ), wobei eine Ladung des Zustands der genannten Zugriffsanforderungs-Signale ( REQ0, REQ1, REQ2, REQ3, REQ4 ) in das genannte Eingangsregister (RE ) erfolgt, und zwar wenn gerade kein Speicherzyklus stattfindet, periodisch, mittels eines Taktsignals (CLK ), und wenn gerade ein Speicherzyklus stattfindet, beim Auftreten eines Impulses an einem Signal (EOC), das von der genannten Speichersteuerung ( 12 ) geliefert wird und dem Ende des Zyklus um eine Verzögerung (t ₅ ) vorhergeht, die eine Funktion der Verarbeitungsdauer der Zugriffsanforderungen durch den genannten Prio ritätsdekoder ( 21 ) ist.

6. HDLC - Schaltung nach Anspruch 5, **dadurch gekennzeichnet, daß** der genannte Prioritätsdekoder ( 21 ) der genannten Speichersteuerung ( 12 ) ein binäres Indikatorsignal ( MA ) zusendet, welches das Vorliegen einer autorisierten Zugriffsanforderung anzeigt, und daß das Laden der genannten , eine Zugriffsanforderung anzeigenden Signale (REQ 0, REQ1, REQ 2, REQ 3, REQ 4 ) in dem genannten Eingangsregister (RE ) durch das Inverse des genannten Anzeigesignals ( MA ) für das Vorliegen einer autorisierten Zugriffsanforderung aktiviert wird.

7. HDLC - Schaltung nach den Ansprüchen 4 und , 5 oder 6, **dadurch gekennzeichnet, daß** die genannte Auffrischvorrichtung ( U 4 ) über eine spezielle Prioritätshandhabüng verfügt , die darin besteht, daß ihr während einer Halbperiode des zwei ihrer Zugriffsanforderungen trennenden Zeitintervalls der niedrigste Prioritätsrang ( P 5 ) zugewiesen wird und während der zweiten Halbperiode dieses Intervalls der höchste Prioritätsrang (P0 ), falls ihre Zugriffsanforderung nicht während der genannten ersten Halbperiode erfüllt werden konnte.

8. HDLC - Schaltung nach Anspruch 7, **dadurch gekennzeichnet, daß** der Prioritätsrang ( P 1, P 2, P 3, P 4 ) der jeweils jedem von der Auffrischvorrichtung ( U 4 ) verschiedenen Objekt ( U 1, U 2, U 3, 9 ) zugeordnet ist, in einem programmierbaren Register (RP ) enthalten ist, das die genannte Arbitragevorrichtung ( 20 ) umfaßt.

9. HDLC - Schaltung nach einem der Ansprüche 1 bis 8, **dadurch gekennzeichnet, daß** die genannte Interruptsteuerung ( U 3 ) Mittel umfaßt zum Organisieren der Speicherung von Wörtern, die wenigstens den Ursprung und die Natur der von verschiedenen Bestandteilen der genannten HDLC - Schaltung ( 1 ) ausgesendeten Interupte wiedergeben, in mehreren Zonen des genannten Speichers ( 2 ).

10. HDLC - Schaltung nach einem der Ansprüche 5 bis 8, **dadurch gekennzeichnet, daß** seine Arbitragevorrichtung ( 20 ) Mittel ( 40, 41 ) zur Verbindung mit anderen Arbitragevorrichtungen ( 20 ) von HDLC-Schaltungen ( 1', 1" ) desselben Typs aufweist, um eine gemeinsame Benutzung des Speichers ( 2 ) unter mehreren HDLC-Schaltungen ( 1, 1', 1" ) zu organisieren, wobei die Zuweisung des genannten ersten externen Bus ( 7 ) zu einer der genannten HDLC-Schaltungen ( 1, 1', 1" ) durch Umlauf eines Impulses or 'Tokens' in einer die verschiedenen Schaltungen ( 1, 1'1" ) ringförmig verbindenden Eindrahtverbindung erfolgt, und wobei jeweils jede HDLC-Schaltung ( 1, 1', 1" ) das genannte 'Token' auf einem Eingangssignal ( TRI ) zugeführt erhält, das von einer vorhergehenden HDLC-Schaltung ( 1", 1, 1') auf einem Ausgangssignal ( TRO ) ausgesandt wird.

11. HDLC - Schaltung nach Anspruch 10, **dadurch gekennzeichnet, daß** die genannten Mittel ( 40, 41 ) außerdem zur Zuweisung des internen Bus ( 3 ) zu einem der genannten Objekte ( U1, U2, U3, U4, 9 ) der HDLC-Schaltung ( 1 ) dienen, wenn in der sie enthaltenden Arbitragevorrichtung ( 20 ) das genannte 'Topken'vorliegt.

12. HDLC - Schaltung nach Anspruch 10 oder 11, **dadurch gekennzeichnet, daß** die Zufuhr des genannten 'Tokens' durch die Arbitragevorrichtung ( 20 ) auf dem genannten Ausgangssignal ( TRO ) ausgelöst wird entweder durch das Auftreten des genannten Anzeigesignals ( EOC ) für das Ende eines Speicherzyklus, oder durch das Fehlen einer Zugriffsanforderung von seiten der Objekte (U1, U2, U3, U4, 9 ) der HDLC-Schaltung ( 1, 1', 1" ), welcher sie zugeordnet ist, während das genannte 'Token' an dem genannten Eingangssignal ( TRI ) anliegt.

13. HDLC-Schaltung nach einem der Ansprüche 10 bis 12, **dadurch gekennzeichnet, daß** die genannten Mittel einen Block ( 41 ) zur Regenerierung des genannten 'Tokens' aufweisen, daß der genannte Regenerierungsblock (41) außer dem Eingangssignal ( TRI ) ein Binärsignal ( REQT ) zugeführt erhält, das das Vorliegen einer Zugriffsanforderung innerhalb der zugeordneten HDLC-Schaltung (1, 1',1" ) anzeigt, und daß der Block dem genannten Prioritätsdekoder (21 ) der zugeordneten Arbitragevorrichtung ( 20, 20',20" ) ein Binärsignal ( ACKT ) zuführt, das eine Zuweisung des genannten 'Tokens' anzeigt, wobei die Breite des das genannte 'Token' bildenden Impulses einer Periode des genannten Taktsignals (CLK) entspricht.

## Claims

1. A high level data link control, HDLC integrated circuit (1) of the type including at least one HDLC controller and two direct memory accesses (RX_DMA, TX_DMA) controllers, **characterized in that** it includes means (20) for organizing the access to a first external bus (7) for connection to an external memory (2), via an internal bus (3) to which are connected different entities, which require to have access to said external memory and of which three are respectively constituted by a DMA reception controller (RX_DMA) (U1), a DMA transmission controller (TX_DMA) (U2) and an interrupt controller (U3), and said internal bus (3) being connected to the first external bus (7) via a memory controller (12) integrated in said HDLC circuit and constituting an electric interface between the internal bus and the first external bus.

2. An HDLC circuit according to claim 1, **characterized in that** a microprocessor (9) external to the circuit (1) is also connected to the internal bus (3) via a second external bus (8), the internal bus (3) being connected to the second external bus (8) via an interface (13) integrated in the HDLC circuit (1), the accesses of the microprocessor (9) to the internal bus (3) being managed by the HDLC circuit (1) which considers the microprocessor (9), on these grounds and via its interface (13), as one of its entities (U1, U2, U3, U4, 9).

3. An HDLC circuit according to claim 2, **characterized in that** the interface (13) is programmable through pins of the HDLC circuit (1) to adapt to different types of microprocessors (9).

4. An HDLC circuit according to any of claims 1 to 3, **characterized in that** the memory controller (12) includes means programmable to adapt to different types, capacities and access speeds of memory (2), one entity of the HDLC circuit (1) being constituted by a device (U4) for refreshing a dynamic memory (DRAM) (2).

5. An HDLC circuit according to any of claims 1 to 4, **characterized in that** the organizing means of the accesses to the internal bus (3) are constituted by an arbitration device (20) receiving asynchronous binary signals (REQ0, REQ1, REQ2, REQ3, REQ4) representing requests for access to the internal bus (3) issued by said entities (U1, U2, U3, U4, 9), the arbitration device (20) issuing binary signals (ACK0, ACK1, ACK2, ACK3, ACK4) authorizing the access to said entities (U1, U2, U3, U4, 9) based on a determination of priority between the different access requests, by means of a wired logic priority decoder (21) associated with an input register (RE), a loading of the state of the access request signals (REQ0, REQ1, REQ2, REQ3, REQ4) in the input register (RE) happening, if no memory cycle is running, periodically, by means of a clock signal (CLK) and, if a memory cycle is running, at the occurrence of a pulse on a signal (EOC) issued by the memory controller (12) and anticipating the end of the memory cycle by a delay (t₅) which is a function of the processing time of the access requests by the priority decoder (21).

6. An HDLC circuit according to claim 5, **characterized in that** the priority decoder (21) sends to the memory controller (12) a binary signal (MA) indicative of the presence of an authorized access request, the loading of the signals (REQ0, REQ1, REQ2, REQ3, REQ4) indicative of an access request in the input register (RE) being enabled by the inverse of the signal (MA) indicative of the presence of an authorized access request.

7. An HDLC circuit according to claims 4 and, 5 or 6, **characterized in that** the refreshing device (U4) has a specific priority management which consists in being assigned the smallest priority rank (P5) for a half-period of the time interval separating its two access requests and the highest priority rank (P0) for the second half-period of this interval if its access request has not been answered during the first half-period.

8. An HDLC circuit according to claim 7, **characterized in that** the priority rank (P1, P2, P3, P4) associated with each entity (U1, U2, U3, 9), other than the refreshing device (U4), is contained in a programmable register (RP) included in the arbitration device (20).

9. An HDLC circuit according to any of claims 1 to 8, **characterized in that** the interrupt controller (U3) includes means for organizing the memorization of words representative of at least the origin and nature of the interrupts emitted by different components of the HDLC circuit (1) in several areas of the memory (2).

10. An HDLC circuit according to any of claims 5 to 8, **characterized in that** its arbitration device (20) includes means (40, 41) for being connected to other arbitration devices (20) of HDLC circuits (1', 1'') of the same type to organize the sharing of the memory (2) between several HDLC circuits (1, 1', 1''), the assignment of the first external bus (7) to one of the HDLC circuits (1, 1', 1'') being performed by circulating a pulse, or "token", in a single-wired link connecting the different circuits (1, 1', 1'') in a ring, each HDLC circuit (1, 1', 1'') receiving the "token" on an input signal (TRI) sent by a preceding HDLC circuit (1'', 1, 1') on an output signal (TRO).

11. An HDLC circuit according to claim 10, **characterized in that** the means (40, 41) are further used to enable the assignment of the internal bus (3) to one of the entities (U1, U2, U3, U4, 9) of the HDLC circuit (1) when the "token" is present in the arbitration device (20) included therein.

12. An HDLC circuit according to claim 10 or 11, **characterized in that** the sending of the "token" by the arbitration device (20) onto the output signal (TRO) is triggered either by the occurrence of the signal (EOC) indicative of the end of a memory cycle, or by the absence of access requests from the entities (U1, U2, U3, U4, 9) of the HDLC circuit (1, 1', 1'') associated therewith while the "token" is present on said input signal (TRI).

13. An HDLC circuit according to any of claims 10 to 12, **characterized in that** said means include a block (41) for regenerating the "token", the regenerating block (41) receiving, besides the input signal (TRI), a binary signal (REQT) indicative of the existence of an access request within the HDLC circuit (1, 1', 1'') associated therewith and issuing, to the priority decoder (21) of the arbitration device (20, 20', 20'') associated therewith, a binary signal (ACKT) indicative of an assignment of the "token", the width of the pulse constituting the "token" corresponding to one period of the clock signal (CLK).
